# EUROPEAN PATENT APPLICATION

(11) **EP 4 592 655 A1**
(43) Date of publication of application: **30.07.2025**
(21) Application number: 24221504.4
(22) Date of filing: 19.12.2024
(51) Int. Cl.: G01K 1/14, H01R 13/66, H01R 13/405, H01R 43/24

(54) **PLUG, ELECTRICAL CONNECTOR, BATTERY PACK AND ELECTRIC DEVICE**

(30) Priority: 29.01.2024 CN 202420220862 U
(71) Applicant: Nio Technology (Anhui) Co., Ltd, Hefei City, Anhui 230601 (CN)
(72) Inventor: YAN, Chunxiao, Jiading Shanghai (CN); ZHANG, Julin, Jiading Shanghai (CN); ZHAO, Yefei, Jiading Shanghai (CN); YAO, Tingting, Jiading Shanghai (CN); WEN, Jiawei, Jiading Shanghai (CN)
(74) Representative: Vossius & Partner Patentanwälte Rechtsanwälte mbB

(57) **Abstract**

The disclosure provides a plug, an electrical connector, a battery pack and an electric device, the plug including an insertion end and a tail end in a first direction, and the insertion end being configured for connection with the socket. The plug includes a first housing and a pin disposed in the first housing. The pin includes a terminal and an insulated second housing, the terminal being disposed in the second housing, and the second housing being provided with a first groove on the side of the tail end. The plug also includes a temperature sensing device disposed in the first groove and in contact with the terminal. The temperature sensing device is disposed in the first groove located at the tail end of the plug, the temperature sensing device is in contact with the terminal for temperature measurement and also facilitates its wiring, without interfering with other elements, and the structure of the plug is also relatively simple.

## Description

### Technical Field

The disclosure relates to the field of connectors, and particularly provides a plug, an electrical connector, a battery pack and an electric device.

### Background Art

An electrical connector is a connecting bridge, is a basic component necessary for a complete system, and plays a very important role in electrical equipment. With the expansion of the application field of electrical equipment, the application environment of the electrical connector has also been expanded, for example, to a new energy vehicle.

The electrical connector is divided into a plug and a socket, which are plugged to complete an electrical connection. The electrical connector for a new energy vehicle is divided into a battery end (plug), a vehicle end (socket) and a station end, where the station end is an interface for charging a battery pack in a battery swap station.

The electrical connector needs to monitor the temperature of a terminal, and if the temperature of the terminal is too high, an external insulation housing of the terminal will melt, leading to difficulty in plugging and unplugging of the plug and the socket.

The wiring of the existing temperature sensing device will interfere with other elements of the electrical connector, making the structure complex.

### Summary

In order to solve the problem of a plug structure being complex caused by interference of the wiring of a temperature sensing device with other elements, the disclosure provides a plug, which includes an insertion end and a tail end in a first direction, the insertion end being configured for connection with a socket, where the plug includes a first housing and a pin disposed in the first housing. The pin includes a terminal and an insulated second housing, the terminal being disposed in the second housing, and the second housing being provided with a first groove on the side of the tail end. The plug also includes a temperature sensing device disposed in the first groove and in contact with the terminal. The temperature sensing device is disposed in the first groove located at the tail end of the plug, the temperature sensing device is in contact with the terminal for temperature measurement and also facilitates its wiring, without interfering with other elements, and the structure of the plug is also relatively simple.

In an optional technical solution of the disclosure, the temperature sensing device is in direct contact with the terminal. The temperature sensing device being in direct contact with the terminal can detect the temperature of the terminal more precisely, avoiding the melting of an external insulation housing of the terminal.

In an optional technical solution of the disclosure, the temperature sensing device includes an elastic housing, a temperature detection element and a wiring harness, the temperature detection element being disposed in the elastic housing, the wiring harness extending into the elastic housing and being electrically connected to the temperature detection element, and the elastic housing being compressed in the first groove. Since the elastic housing can be compressed in the first groove, the temperature sensing device can be brought into direct contact with the terminal for temperature measurement.

In an optional technical solution of the disclosure, the second housing includes a first wall and a second wall connected circumferentially, the first wall being disposed outside the first groove, and the first wall having a wall thickness greater than that of the second wall, which allows the wiring of the temperature sensing device to have a sufficient bending radius to prevent the wiring harness from being broken.

In an optional technical solution of the disclosure, the wall thickness L of the first wall satisfies: 1.5 mm ≤ L ≤ 4 mm. If the wall thickness L of the first wall is too small, the bending radius of the wiring of the temperature sensing device is too small, which may cause the wiring harness to be broken. If the wall thickness L of the first wall is too large, it takes up too much space and interferes with the arrangement of other elements of the plug. By setting the wall thickness of the first wall to the above numerical range, it is possible to take into account the rational spatial arrangement of the elements of the plug, and also to avoid damage to the wiring harness.

In an optional technical solution of the disclosure, in the first direction, a depth H1 of the first groove and a height H2 of a detection portion of the temperature sensing device satisfy: 1 mm ≤ H1 - H2 ≤ 4 mm. By setting the value of H1 - H2 to the above numerical range, it is possible to take into account the rational spatial arrangement of the elements of the plug, and also to avoid damage to the wiring harness.

In an optional technical solution of the disclosure, the plug further includes a temperature sensing fixture disposed on the temperature sensing device in the first direction, the temperature sensing fixture including a first limiting portion and a second limiting portion, an outer side surface of the second housing being provided with a third limiting portion, the first limiting portion being engaged with an inner side surface of the second housing, and the second limiting portion being engaged with the third limiting portion. The temperature sensing fixture may prevent the temperature sensing device from falling out of the pin.

In an optional technical solution of the disclosure, the temperature sensing fixture includes a through hole through which a wiring harness of the temperature sensing device extends.

In an optional technical solution of the disclosure, the temperature sensing fixture includes a cover plate disposed on an end wall of the second housing, the cover plate including a second groove abutting against the terminal, and a curvature of the second groove being the same as that of a side wall of the terminal. That is, the second groove of the cover plate is designed to conform to the side wall of the terminal, so that the cover plate is in close contact with the side wall of the terminal to completely cover a gap between the terminal and the second housing, thereby preventing dust and other particles from entering the pin.

The disclosure further provides an electrical connector, including a socket and the plug.

The disclosure further provides a battery pack, including the plug.

The disclosure further provides an electric device, including the plug.

### Brief Description of the Drawings

FIG. 1 is an exploded view of a plug;
FIG. 2 is a cross-sectional view of a plug;
FIG. 3 is a partial enlarged view of FIG. 2;
FIG. 4 is a perspective view of a plug;

### List of reference signs:

Insertion end 1;
Tail end 2;
First housing 3, First through hole 3.1;
Pin 4;
Terminal 4. 1;
Second housing 4.2, First groove 4.21, Elastic clip 4.22, First wall 4.23, Second wall 4.24, Third limiting portion 4.25;
Temperature sensing device 5, Wiring harness 5.1;
Temperature sensing fixture 6, First limiting portion 6.1, Second limiting portion 6.2, Cover plate 6.3, Second through hole 6.21, Second groove 6.31.

### Detailed Description of Embodiments

The optional implementations of the disclosure are described below with reference to the accompanying drawings. It should be understood by those skilled in the art that these implementations are only for explaining the technical principles of the disclosure and are not intended to limit the scope of protection of the disclosure.

It should be understood that, in the description of the disclosure, the terms that indicate the orientation or positional relationship, such as "distance", "width", "thickness", "upper", "lower", "left", "right", "inner" and "outer", are based on the orientation or positional relationship shown in the figures, which is merely intended to facilitate and simplify the description of the disclosure rather than indicating or implying that the device or element must have a particular orientation and be constructed and operated in a particular orientation, and therefore should not be construed as limiting the disclosure.

In the description of the disclosure, the terms "first", "second", "third" and "fourth" are used for descriptive purposes only, and cannot be construed as indicating or implying relative importance or implicitly indicating the number of technical features indicated. In the description of the disclosure, the phrase "a plurality of" means at least two, such as two, three, etc., unless otherwise specifically defined.

In addition, it should also be noted that, in the description of the disclosure, the terms "dispose" and "connect" should be interpreted in a broad sense unless explicitly defined and limited otherwise. For example, a connection may be a fixed connection, a detachable connection, or an integral connection; and may be a direct connection, an indirect connection by means of an intermediary, or internal communication between two elements. For those skilled in the art, the specific meaning of the above-mentioned terms in the disclosure can be interpreted according to the specific situation.

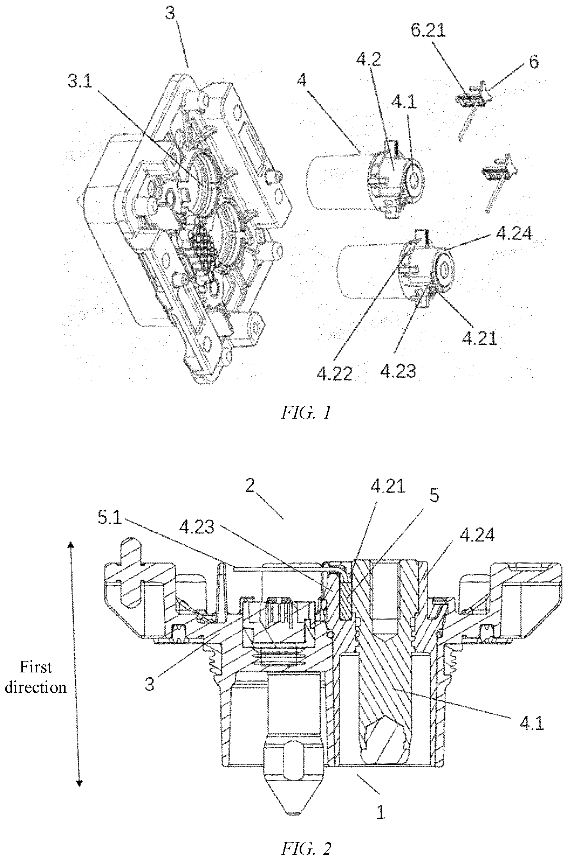

As shown in FIGS. 1 and 2, the disclosure provides a plug including an insertion end 1 and a tail end 2 in a first direction, the insertion end 1 being configured for connection with a socket, the plug including a first housing 3 and a pin 4, and the pin 4 being disposed in the first housing 3. The pin 4 includes a terminal 4.1 and an insulated second housing 4.2, the terminal 4.1 being disposed in the second housing 4.2, and the second housing 4.2 being provided with a first groove 4.21 on the side of the tail end 2. The plug also includes a temperature sensing device 5 disposed in the first groove 4.21 and in contact with the terminal 4.1. The temperature sensing device 5 is disposed in the first groove 4.21 located at the tail end 2 of the plug, the temperature sensing device 5 is in contact with the terminal 4.1 for temperature measurement and also facilitates its wiring, without interfering with other elements, and the structure of the plug is also relatively simple.

In this embodiment, as shown in FIG. 2, the first housing 3 of the plug is provided with a first through hole 3.1 for the pin to pass through. The insulated second housing 4.2 is injection molded directly on the metal terminal 4.1, and the second housing 4.2 is provided with an elastic clip 4.22; when the pin 4 is mounted in the first housing 3, the elastic clip 4.22 is elastically deformed by compression of an end wall of the through hole 3.1 of the first housing 3 so as to enable continued insertion of the pin, and when moving under the end wall, the elastic clip 4.22 releases its elastic deformation to engage with the first housing 3, so that the pin 4 can be quickly mounted in the first housing 3.

In an optional embodiment of the disclosure, as shown in FIG. 1, the temperature sensing device 5 is in direct contact with the terminal 4.1. The temperature sensing device 5 being in direct contact with the terminal 4.1 can detect the temperature of the terminal more precisely, avoiding the melting of an external insulation housing of the terminal. Of course the temperature sensing device 5 can also be in indirect contact with the terminal 4.1 through a thermal conductive member, as long as a high heat transfer efficiency between the temperature sensing device 5 and the terminal 4.1 can be ensured, and the temperature sensing device 5 can promptly and accurately detect the temperature of the terminal.

In an optional embodiment of the disclosure, as shown in FIGS. 1 and 2, the temperature sensing device 5 includes an elastic housing, a temperature detection element and a wiring harness 5.1, the temperature detection element being disposed in the elastic housing, the wiring harness 5.1 extending into the elastic housing and being electrically connected to the temperature detection element, and the elastic housing being compressed in the first groove 4.21. Since the elastic housing can be compressed in the first groove 4.21, the temperature sensing device 5 can be brought into direct contact with the terminal 4.1 for temperature measurement. The elastic housing is a rubber sleeve with a high thermal conductivity, which can effectively conduct heat from the terminal 4.1 to the temperature detection element, and also by its deformation enables the temperature detection element to closely fit the terminal 4.1.

In an optional embodiment of the disclosure, as shown in FIGS. 1 and 2, the second housing 4.2 includes a first wall 4.23 and a second wall 4.24 connected circumferentially, the first wall 4.23 being disposed outside the first groove 4.21, and the first wall 4.23 having a wall thickness greater than that of the second wall 4.24, which allows the wiring harness 5.1 extending from the temperature sensing device 5 to have a sufficient bending radius to prevent the wiring harness 5.1 from being broken, and also to reduce the effect on structural strength caused by the provision of the first groove 4.21.

In an optional embodiment of the disclosure, as shown in FIGS. 1-3, the wall thickness L of the first wall 4.23 satisfies: 1.5 mm ≤ L ≤ 4 mm. If the wall thickness L of the first wall 4.23 is too small, the bending radius of the wiring of the temperature sensing device 5 is too small, which may cause the wiring harness 5.1 to be broken. If the wall thickness L of the first wall 4.23 is too large, it takes up too much space and interferes with the arrangement of other elements of the plug. By setting the wall thickness of the first wall 4.23 to the above numerical range, it is possible to take into account the rational spatial arrangement of the elements of the plug, and also to avoid damage to the wiring harness 5.1. Specifically, L may be 1.5 mm, 2 mm, 2.5 mm, 3 mm, 3.5 mm, or 4 mm.

In an optional embodiment of the disclosure, as shown in FIGS. 1-3, in the first direction, a depth H1 of the first groove 4.21 and a height H2 of a detection portion of the temperature sensing device 5 satisfy: 1 mm ≤ H1 - H2 ≤ 4 mm. By setting the value of H1 - H2 to the above numerical range, it is possible to take into account the rational spatial arrangement of the elements of the plug, and also to avoid damage to the wiring harness. Specifically, the value of H1 - H2 may be 1 mm, 1.5 mm, 2 mm, 2.5 mm, 3 mm, or 4 mm.

In an optional embodiment of the disclosure, as shown in FIGS. 1-4, the plug further includes a temperature sensing fixture 6 disposed on the temperature sensing device 5 in the first direction. Specifically, the temperature sensing fixture 6 is generally U-shaped, and the temperature sensing fixture 6 includes a first limiting portion 6.1, a second limiting portion 6.2, and a cover plate 6.3 connecting the first limiting portion 6.1 and the second limiting portion 6.2. The cover plate 6.3 is supported on an end wall of the first wall 4.23, and the first limiting portion 6.1 is engaged with an inner side surface of the second housing 4.2. An outer side surface of the second housing 4.2 is provided with a third limiting portion 4.25, and the second limiting portion 6.2 is engaged with the third limiting portion 4.25. The temperature sensing fixture 6 may prevent the temperature sensing device 5 from falling out of the pin 4. The second limiting portion 6.2 of the temperature sensing fixture 6 is provided with a second through hole 6.21, and the wiring harness 5.1 of the temperature sensing device extends from the second through hole 6.21. In this embodiment, the temperature sensing fixture 6 is an elastic plastic part.

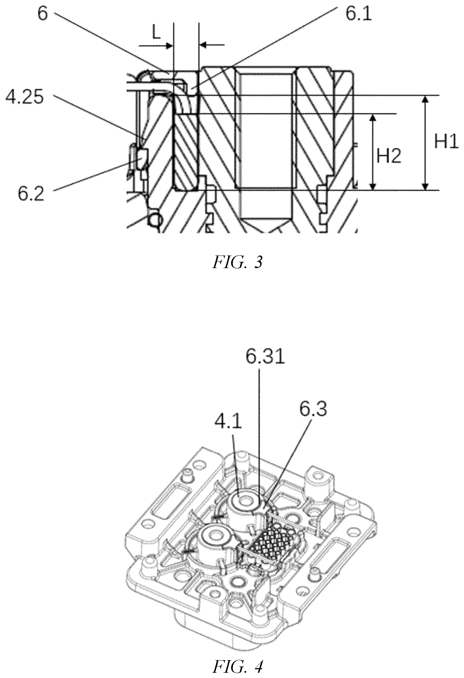

In an optional embodiment of the disclosure, as shown in FIG. 4, the cover plate 6.3 includes a second groove 6.31 abutting against the terminal 4.1, a curvature of the second groove 6.31 being the same as that of a side wall of the terminal 4.1. That is, the second groove 6.31 of the cover plate 6.3 is designed to conform to the side wall of the terminal 4.1, so that the cover plate 6.3 is in close contact with the side wall of the terminal 4.1 to completely cover a gap between the terminal 4.1 and the second housing 4.2, thereby preventing dust and other particles from entering the pin 4.

The disclosure further provides an electrical connector, including a socket and the plug.

The disclosure further provides a battery pack, including the plug.

The disclosure further provides an electric device, including the plug. That is, the plug may be disposed at the end of a battery pack or an electric device, that is, one of the battery pack and the electric device is provided with the plug and the other is provided with a socket for interfacing with the plug, and the electric device can be an electric vehicle, etc.

Heretofore, the technical solutions of the disclosure have been described in conjunction with the optional implementations shown in the drawings, however, those skilled in the art can readily understand that the scope of protection of the disclosure is clearly not limited to these specific implementations. Those skilled in the art could make equivalent changes or substitutions to the related technical features without departing from the principles of the disclosure, and all the technical solutions after the changes or the substitutions fall within the scope of protection of the disclosure.

## Claims

1. A plug, which comprises an insertion end and a tail end in a first direction, the insertion end being configured for connection with a socket, the plug comprising a first housing and a pin disposed in the first housing;
wherein the pin comprises a terminal and an insulated second housing, the terminal being disposed in the second housing, and the second housing being provided with a first groove on the side of the tail end; and
the plug also comprises a temperature sensing device disposed in the first groove and in contact with the terminal.

2. The plug of claim 1, wherein the temperature sensing device is in direct contact with the terminal.

3. The plug of claim 1 or 2, wherein the temperature sensing device comprises an elastic housing, a temperature detection element and a wiring harness, the temperature detection element being disposed in the elastic housing, the wiring harness extending into the elastic housing and being electrically connected to the temperature detection element, and the elastic housing being compressed in the first groove.

4. The plug of any of claims 1 to 2, wherein the second housing comprises a first wall and a second wall connected circumferentially, the first wall being disposed outside the first groove, and the first wall having a wall thickness greater than that of the second wall.

5. The plug of claim 4, wherein the wall thickness L of the first wall satisfies: 1.5 mm ≤ L ≤ 4 mm.

6. The plug of any of claims 1 to 5, wherein in the first direction, a depth H1 of the first groove and a height H2 of a detection portion of the temperature sensing device satisfy: 1 mm ≤ H1 - H2 ≤ 4 mm.

7. The plug of any of claims 1 to 6, wherein the plug further comprises a temperature sensing fixture disposed on the temperature sensing device in the first direction, the temperature sensing fixture comprising a first limiting portion and a second limiting portion, an outer side surface of the second housing being provided with a third limiting portion, the first limiting portion being engaged with an inner side surface of the second housing, and the second limiting portion being engaged with the third limiting portion.

8. The plug of claim 7, wherein the temperature sensing fixture comprises a through hole through which a wiring harness of the temperature sensing device extends.

9. The plug of claim 7 or 8, wherein the temperature sensing fixture comprises a cover plate disposed on an end wall of the second housing, the cover plate comprising a second groove abutting against the terminal, and a curvature of the second groove being the same as that of a side wall of the terminal.

10. An electrical connector, comprising a plug according to any one of claims 1 to 9 and a socket.

11. A battery pack, comprising a plug according to any one of claims 1 to 9.

12. An electric device, comprising a plug according to any one of claims 1 to 9.
